Europäisches Patentamt

European Patent Office

Office européen des brevets

(19)

(11) Veröffentlichungsnummer : **0 323 581 B1**

(12) **EUROPÄISCHE PATENTSCHRIFT**

(45) Veröffentlichungstag der Patentschrift :
**10.05.95 Patentblatt 95/19**

(51) Int. Cl.$^6$ : **H01B 3/44**

(21) Anmeldenummer : **88120670.0**

(22) Anmeldetag : **10.12.88**

(54) **Elektrische Kabel, die Isolierungen auf Basis von Ethylenpolymerisaten mit hoher Widerstandsfähigkeit gegenüber der Bildung von Wasserbäumchen enthalten.**

(30) Priorität : **17.12.87 DE 3742769**

(43) Veröffentlichungstag der Anmeldung :
**12.07.89 Patentblatt 89/28**

(45) Bekanntmachung des Hinweises auf die
Patenterteilung :
**10.05.95 Patentblatt 95/19**

(84) Benannte Vertragsstaaten :
**AT BE CH DE FR GB IT LI NL**

(56) Entgegenhaltungen :
**DE-A- 3 607 756**
**CHEMICAL ABSTRACTS, Band 100, Nr. 10, 5.**
**März 1984, Seite 56, Zusammenfassung Nr.**
**69546h; & JP-A-58 152 303**
**DATABASE WPIL, AN= 84-051510, Derwent**
**Publications Ltd, London, GB; & JP-A-59 008**
**742**
**Kunstoff-Lexikon, 7 Auflage, 250-251, Carl**
**Hanser Verlag München Wien (1983)**
**Römpp Chemie Lexikon, 9 Auflage, 2041,**
**Georg Thieme Verlag Stuttgart.New York**
**(1990)**

(73) Patentinhaber : **BASF Aktiengesellschaft**
**Carl-Bosch-Strasse 38**
**D-67063 Ludwigshafen (DE)**

(72) Erfinder : **Schlag, Johannes, Dr.**
**Leuschnerstrasse 36**
**D-6700 Ludwigshafen (DE)**
Erfinder : **Koehnlein, Ernst, Dr.**
**Ungsteiner Strasse 4**
**D-6700 Ludwigshafen (DE)**
Erfinder : **Bauer, Peter**
**Erich-Kaestner-Strasse 13**
**D-6700 Ludwigshafen (DE)**
Erfinder : **Herner, Martin, Dr.**
**Mandelring 38**
**D-6706 Wachenheim (DE)**
Erfinder : **Hub, Hans-Henning, Dr.**
**Dr.-Illert-Strasse 37**
**D-6520 Worms 23 (DE)**

## Beschreibung

Die Erfindung betrifft elektrisches Kabel, enthaltend eine Kabelisolierung mit hoher Widerstandsfähigkeit gegenüber dem Entstehen oder dem Wachstum von Wasserbäumchen (water trees) und mit hoher Alterungsbeständigkeit bestehend aus einem Ethylenpolymerisat (I) und 0,5 bis 20 Gew.%, bezogen auf das Ethylenpolymerisat (I), eines von (I) unterschiedlichen Ethylencopolymerisats (II) und üblichen Zusatzstoffen in üblichen Mengen.

Bei derartigen Isolierungen für elektrische Kabel und Leitungen aus Ethylenpolymerisaten können sich bei gleichzeitiger Einwirkung von hohen elektrischen Feldstärken und Feuchtigkeit die sogenannten Wasserbäumchen (Watertrees) ausbilden, die als Schwächung der Isolierung angesehen werden und deshalb durch geeignete Zusätze vermieden werden müssen.

Es gibt zahlreiche Vorschläge zur Vermeidung bzw. Verminderung der Gefahr von Wasserbäumchen, welche die Zusammensetzung bzw. die Zugabe von Verzögerer gegen die Bildung von Wasserbäumchen betreffen.

So ist es aus der DE-A-29 48 492 bekannt, das für Kabelisolierungen vorgesehene Polyolefinmaterial nach der Granulierung und unmittelbar vor der Extrusion mit reinem Wasser zu waschen, um die die Wasserbäumchen verursachenden geringen Mengen wasserlöslicher und hygroskopischer Salze zu entfernen (vgl. auch DE-A-29 11 756). Nachteilig bei diesem bekannten Verfahren ist der verhältnismäßig große Verfahrensaufwand, denn die Granulate müssen nach dem Waschvorgang mit Heißluft getrocknet werden.

Es ist auch bereits beschrieben, dem Polyolefinkabelmaterial vor seiner Herstellung sog. Wasserbäumchen-Inhibitoren zuzusetzen, die sich von polymeren Materialien ableiten. So werden für diesen Zweck in der Literatur empfohlen: Organopolysiloxane (vgl. US-A-4 492 647, 4 536 530 und EP-A-109 797), Polyethylenglykole (vgl. EP-A-57 604), Epoxidharze (vgl. Chem. Abstr. 96:182235), Ethylen-1-Buten- oder -1-Hexen-Copolymere (vgl. Chem. Abstr. 101:193825), Polypropylen (vgl. Chem. Abstr. 102:8329), Poly-1-buten (vgl. Chem. Abstr. 98:5097), Ethylen-Vinylacetat-Copolymerisat (vgl. Chem. Abstr. 93:169329), Polystyrol und Triallylisocyanurat (vgl. DD-A-160 808) mit Styrol gepfropftes Ethylen-Vinylacetat- oder Ethylen-Alkylacrylat-Copolymerisat (vgl. Chem. Abstr. 103:7802), Polyvinylalkohol (vgl. Chem. Abstr. 95:204983), chlorsulfoniertes Polyethylen (vgl. Chem. Abstr. 95:204981), Polyamid (vgl. Chem. Abstr. 96:21007) Ethylen-Ethylacrylat-Copolymerisat (vgl. Chem. Abstr. 99:177160) oder ein Styrolcopolymerisat, z.B. Styrol-Butadien- oder Styrol-Isopren-Kautschuk (vgl. Chem. Abstr. 92:7572 und Annual Convention of the Wire Association in Baltimore, U.S.A., reprint of paper, Nov. 1984, ETR No. 3A-1995).

Bei den oben beschriebenen bekannten Polyolefinkabelmaterialien mit Zusätzen von polymeren Wasserbäumchen-Inhibitoren sind die Effekte und die Beeinflussung des Wasserbäumchenwachstums sehr unterschiedlich, quantitative Aussagen fehlen in den meisten Fällen. In vielen Fällen wirken sich die Zusätze negativ auf die Homogenität des Polyolefin-Kabelmaterials und nachteilig auf die Alterungsbeständigkeit des Isoliermaterials aus.

Es ist auch bereits bekannt, gegen elektrische Beanspruchung stabilisiertes Isoliermaterial auf Basis von Polyolefinen und Copolymerisaten des Ethylen mit Vinylacetat zu verwenden, wobei das Polyolefin aus einem Ethylen-Alkylacrylat- oder Ethylen-Acrylsäure-Copolymerisat bestehen kann (vgl. US-A-4 092 488). Derartige Mischungen aus Ethylenpolymerisaten weisen den Nachteil auf, daß entweder eine ungenügende Resistenz gegenüber der Ausbildung und dem Wachstum von Wasserbäumchen erzielt wird oder die Menge der Ester- bzw. Säuregruppen so hoch gewählt werden muß, daß die dielektrischen Verluste der Massen unzulässig erhöht werden.

In der DE-A-3 607 756 sind Kabelisolierungen mit hoher Widerstandsfähigkeit gegenüber dem Entstehen von Wasserbäumchen beschrieben, die aus einem Gemisch zweier Ethylenpolymerisate bestehen, wobei das eine Ethylenpolymerisat Polyethylen sein kann und das zweite Polymerisat ein Terpolymerisat aus Ethylen, Acrylsäureester und Acrylsäure ist. Derartige Polyolefinkabelmaterialien weisen aber noch den Nachteil auf, daß ihre mechanische Festigkeit niedriger und daß ihre Haftung auf anderen z.B. leitfähigen Schichten der Kabelisolierung, jeweils verglichen mit den erfindungsgemäßen Materialien, höher ist. Insbesondere letztere Eigenschaft erschwert die Handhabung bei Arbeiten bei der Herstellung von Anschlüssen und Verbindungen. Zudem muß der Gehalt an Comonomeren in der Gesamtmischung, verglichen mit den erfindungsgemäßen Polymeren, höher sein, wenn der gewünschte Effekt der Inhibierung des Entstehens und Wachsens von Wasserbäumchen erzielt werden soll.

Aufgaben der vorliegenden Erfindung war es, die erwähnten Nachteile zu vermeiden und eine Kabelisolierung für elektrische Kabel auf Basis von Ethylenpolymerisaten zu schaffen, die sowohl eine hohe Widerstandsfähigkeit gegenüber dem Entstehen oder dem Wachstum von Wasserbäumchen aufweisen als auch geringe dielektrische Verluste und eine hohe Alterungsbeständigkeit besitzen.

Diese Aufgaben wurden durch elektrische Kabel mit Kabelisolierungen gemäß Ansprüchen 1 bis 5 gelöst.

**EP 0 323 581 B1**

Elektrische Kabel und Isolierungen für elektrische Kabel und Leitungen aus Ethylenpolymerisaten sind wohlbekannt. Es ist wichtig, daß das Isoliermaterial verschiedene physikalische mechanische und elektrische Eigenschaften aufweist, um es für spezielle Anwendungen in der Kabelindustrie geeignet zu machen. Im vorliegenden Fall soll insbesondere die Widerstandsfähigkeit gegenüber der Bildung von Wasserbäumchen derart verbessert sein, daß bei Anwendung eines Ethylenpolymerisatmaterials mit technisch nicht vermeidbaren Gehalten an Verunreinigungen an wasserlöslichen Salzen unter Spannungsbelastung bei Wasser- oder Feuchtigkeitszutritt die Lebensdauer der Isolierung gegenüber nicht ausgerüstetem Material erhöht ist. Da die zulässige Leitertemperatur 90°C beträgt, soll gleichzeitig eine gute Alterungsbeständigkeit, d.h. eine langanhaltende Beständigkeit gegen thermische Oxidation und Abfall der mechanischen Eigenschaften gewährleistet sein.

Unter den Ethylenpolymerisaten (I) im Sinne der vorliegenden Erfindung sollen Ethylenhomo- und -copolymerisate verstanden werden, die sich von Ethylenpolymerisat (II) unterscheiden. Derartige Ethylenpolymerisate sind so bekannt, daß sich eine weitere Erläuterung erübrigt. Besonders geeignete Ethylenpolymerisate sind Polyethylene niederer Dichte (unter 0,934 g/cm$^3$ nach DIN 53 479), Ethylencopolymerisate mit $\alpha$-Olefinen, die 3 bis 8 C-Atome enthalten und deren Anteil 5 bis 15 Gewichtsprozent beträgt, Ethylen-Vinylacetat-Copolymerisate, bevorzugt mit 0,5 bis 8 Gewichtsprozent einpolymerisiertem Vinylacetat, Ethylen-Acrylsäureester-Copolymerisate, insbesondere Ethylen-Acrylsäureethyl-, n- oder tert-butyl-oder -ethylhexylacrylsäureester und ähnliche Ethylencopolymerisate außer den Ethylenterpolymerisaten (II). Die Ethylenpolymerisate weisen im nicht vernetzten Zustand bevorzugt Schmelzindexwerte, gemessen nach ASTM-D 1238-70 bei 190°C und 2,16 kg Belastung von 0,2 bis 10 g/10 min und Dichten von 0,890 bis 0,934 g/cm$^3$, gemessen nach DIN 53 479, auf. Statt der reinen Ethylenhomo- oder -copolymerisate sind auch Mischungen verschiedener Ethylenpolymerisate geeignet. Derartige Ethylenpolymerisate, deren Eigenschaften und Herstellung sind beispielsweise in den Publikationen "Ullmanns Encyklopädie der technischen Chemie", 4. Auflage, Band 19, Verlag Chemie GmbH, D-6940 Weinheim, 1980, Seiten 169 bis 195; "Kunststoffe" 67, (1977), Seiten 118 bis 121 und den US-Patenten 3 117 953 und 4 217 431 beschrieben. Die Ethylenpolymerisate können vernetzt oder unvernetzt sein, bevorzugt sind sie aber zu 50 bis 90 % entweder durch Peroxide oder energiereiche Strahlung vernetzt.

Die Ethylenpolymerisate (I) enthalten 0,5 bis 40, bevorzugt 5 bis 35, insbesondere 10 bis 30 Gewichtsprozent eines von (I) unterschiedlichen Ethylencopolymerisats (II), wobei sich die Gewichtsprozentzahlen auf das Gewicht des Ethylenpolymerisats (I) beziehen. Das Ethylencopolymerisat (II) wird mit dem Ethylenpolymerisat (I) in üblichen Mischern nach herkömmlichen Methoden gemischt.

Die Mischung aus Ethylenpolymerisat (I) und Ethylencopolymerisat (II) enthält noch übliche Zusatzstoffe in üblichen Mengen. Unter üblichen Zusatzstoffen sind insbesondere Antioxidantien, Flammschutzmittel, Vernetzungshilfsmittel wie Triallylcyanurat und Vernetzungsmittel wie organische Peroxide zu verstehen von 0,5 bis 3,0 Gewichtsprozent, bezogen auf die Mischung.

Erfindungsgemäß soll das Ethylencopolymerisat (II) ein Ionomer sein, das neben überwiegenden Mengen Ethylen eine $C_3$- bis $C_6$-Alkencarbonsäure oder eine $C_4$- bis $C_6$-Alkendicarbonsäure oder ein $C_4$- bis $C_6$-Dicarbonsäureanhydrid einpolymerisiert enthält, wobei ein Teil der Carboxylgruppen bzw. Carbonsäureanhydridgruppen zu Metallsalzen mit Metallen der 1. oder 2. Gruppe des Periodensystems umgesetzt ist. Derartige Ethylencopolymerisat-Ionomere sind bekannt, und beispielsweise beschrieben in der Ullmann's Encyklopädie der technischen Chemie, 4. Auflage, Band 15, (1978), Seiten 426 bis 428 oder in der Encyclopedia of Polymer Science and Engineering, 2. Auflage, Band 8, (1987), Seiten 393 bis 423. Bei der Herstellung der Ionomeren werden die freien Carboxylgruppen des Ethylen-$C_3$- bis $C_6$-Alkencarbonsäure- bzw. des Ethylen-$C_4$- bis $C_6$-Alkendicarbonsäure- bzw. des Ethylen-$C_4$- bis $C_6$-Alkendicarbonsäureanhydrid-Copolymerisats mit anorganischen Basen oder den entsprechenden Salzen von Metallen der 1. oder 2. Gruppe des Periodensystems umgesetzt. Geeignet sind vor allem Alkali- oder Erdalkalihydroxide sowie die Salze der Alkalimetalle, Erdalkalimetalle oder des Zinks mit organischen Säuren (vgl. z. B. die US-Patente 32 64 272 oder 34 37 718). Die zur Umsetzung gelangenden carboxylgruppenhaltigen Ethylencopolymerisate sind so bekannt, daß sich eine ausführliche Beschreibung erübrigt (vgl. z. B. die DE-A-36 07 756). Die Ethylencopolymerisate enthalten im allgemeinen 50 bis 90 Mol-Teile Ethylen einpolymerisiert.

In den Ethylencopolymerisat-Ionomeren (II) liegt ein Teil der Carboxylgruppen bzw. Carbonsäureanhydridgruppen als freie Carboxylgruppen bzw. Carbonsäureanhydridgruppen vor, der Rest ist mit Metallkationen der 1. oder 2. Gruppe des Periodensystems gebunden. Unter einem Teil wird dabei ein Gehalt von 15 bis 30 Mol.% verstanden.

Bevorzugt besteht das Ausgangspolymerisat für das Ethylencopolymerisat-Ionomer (II) aus 100 Mol-Teilen einpolymerisiertem Ethylen, 1 bis 6 Mol-Teilen einpolymerisierter Alken(di)carbonsäure(anhydrid) und 0 bis 5,5 Mol-Teilen einpolymerisiertem $C_1$- bis $C_8$-Alkylester einer $C_3$- bis $C_6$-Alkencarbonsäure. Derartige Co- bzw. Terpolymerisate des Ethylens sind in der DE-A-36 07 756 beschrieben. Insbesondere bevorzugt als einpolyme-

3

risierte Carbonsäure bzw. einpolymerisiertes Carbonsäureanhydrid sind Acrylsäure und Maleinsäureanhydrid.

Bevorzugt sind elektrische Kabel enthaltend eine Kabelisoliermasse, bei denen die im Ethylencopolymerisat-Ionomer (II) einpolymerisierte Carbonsäure bzw. das einpolymerisierte Carbonsäureanhydrid zu 15 bis 30 Mol.% zum Metallsalz umgesetzt ist.

Ein besonders bevorzugtes Metallkation im Ethylencopolymerisat-Ionomer (II) ist das Natrium- oder Zinkkation.

Es ist ein Vorteil, wenn das Ethylencopolymerisat-Ionomer (II) einen Schmelzindex, gemessen bei 190°C und 2,16 kp Belastung nach DIN 53735, von 0,2 bis 20 g/10 min hat.

Bevorzugt ist auch ein elektrisches Kabel enthaltend eine Kabelmischung bei dem im Ethylencopolymerisat-Ionomer (II) die ungesättigte Carbonsäure bzw. das ungesättigte Carbonsäureanhydrid pfropfcopolymerisiert ist. Derartige Propfcopolymerisate und deren Herstellung zu Ethylencopolymerisat-Ionomeren sind z.B. aus den US-Patenten 3 264 272 und 3 437 718 bekannt.

Die mit der Erfindung erzielbaren Vorteile sind insbesondere darin zu sehen, daß ein Kabel mit einem Kabelisoliermaterial auf Basis von Ethylenpolymerisaten zur Verfügung gestellt wird, wobei sowohl das Entstehen oder Wachsen von Wasserbäumchen inhibiert ist als auch geringe dielektrische Verluste und hohe Alterungsbeständigkeit zu verzeichnen sind.

Vergleichsbeispiel A

Polyethylen niederer Dichte des Schmelzindex von 2 g/10 min und einer Dichte von 0,918 g/cm$^3$ werden mit 0,3 Gew.% 4,4'-Thiobis-(6-tertiärbutyl-3-methyl-phenol) als Wärmestabilisator und 1,8 Gew.% Dicumylperoxid als Vernetzer ausgerüstet.

Aus dieser Zubereitung werden 1 mm dicke Preßplatten hergestellt bei einer Temperatur von 130°C, wobei das Polyethylen nicht vernetzt wird.

Bei der Prüfung auf water-tree wird Kochsalz in Form kleiner Kristalle (Kantenlänge 10 μm) fein verteilt als Schicht in das Polyethylen eingebracht. Dies geschieht, indem das Salz auf die unvernetzte Platte aufgestäubt, danach eine zweite ebensolche Platte aufgelegt und dieses Sandwich bei 200°C 10 min auf eine Dicke von 1 mm gepreßt wird. Dabei wird das Polyethylen vernetzt.

Danach werden die Proben bei 100 %iger Luftfeuchtigkeit mit einer Feldstärke von 2,5 kV/mm belastet.

Nach der elektrischen Belastung werden unter einem Lichtmikroskop die Anzahl, die Länge und die Struktur der entstandenen water trees in den einzelnen Proben festgestellt. Die Feststellung der Zahl der water trees geschieht im Strahlengang parallel zur Richtung des elektrischen Feldes, in dem die Belastung erfolgte.

Die Zahl der gebildeten water trees wird auf die Zahl der NaCl-Kristalle bezogen und als Menge in Gew.% in der Tabelle angegeben. Die Länge der water trees wird an ca. 0,5 mm dicken Schnitten durch die Probe ermittelt, wobei die Blickrichtung senkrecht zu der des elektrischen Feldes steht.

Die dielektrischen Verluste (tangδ) werden an 1 mm dicken Preßplatten bei 23°C und 80°C und einer Frequenz von 60 Hz bestimmt.

Vergleichsbeispiel B

Polyethylen wie in Vergleichsbeispiel A wird mit einem Terpolymerisat bestehend aus 88 Gew.% Ethylen 8 Gew.% n-Butylacrylat und 4 Gew.% Acrylsäure (AA) derart gemischt, daß die Mischung 1,3 Gew.% nBA und 0,7 Gew.% AA enthält. Wärmestabilisator und Vernetzer wird wie in dem Vergleichsbeispiel A (vgl. DE-A-36 07 756) zugesetzt.

Geprüft wird wie in Vergleichsbeispiel A, Ergebnis siehe Tabelle.

Beispiel 1

Polyethylen wie in Vergleichsbeispiel A wird mit einem Ionomeren bestehend aus 92 Gew.% Ethylen und 8 Gew.% Acrylsäure (AA), deren Carboxylgruppen zu 30 % mit Zn$^{2+}$ neutralisiert sind, derart gemischt, daß die Mischung 1,6 Gew.% AA enthält. Wärmestabilisator und Vernetzer wird wie in dem Vergleichsbeispiel A zugesetzt.

Geprüft wird wie in Vergleichsbeispiel A, Ergebnis siehe Tabelle.

Beispiel 2

Es wird verfahren wie in Beispiel 1, aber bis zu 15 % mit Zn$^{2+}$ neutralisiert.

4

Beispiel 3

Es wird verfahren wie in Beispiel 1, aber zu 30 % mit $Na^+$ neutralisiert.

Tabelle

| Beispiel | Mischung Gew.% | | | Water tree | | | |
|---|---|---|---|---|---|---|---|
| | LDPE | nBA | AA | 7 Tage | | 80 Tage | |
| | | | | Menge | Länge | Menge | Länge |
| | | | | % | μm | % | μm |
| A | 100 | – | – | 95 | 400 | 95 | 1000 |
| B | 98 | 1,3 | 0,7 | 1 | 400 | 10 | 500 |
| 1 | 97,4 | | 1,6*) | 0 | – | 0 | – |
| 2 | 97,4 | | 1,6**) | 0 | – | 0 | – |
| 3 | 97,4 | | 1,6***) | 0 | – | 0 | – |

LDPE = Low Density Polyethylen

nBA = n-Butylacrylat

AA = Acrylic Acid

*) = AA zu 30 % neutralisiert mit $Zn^{2+}$

**) = AA zu 15 % neutralisiert mit $Zn^{2+}$

***) = AA zu 30 % neutralisiert mit $Na^+$

Der Tabelle ist zu entnehmen, daß acrylsäurehaltige Copolymerisate, deren Carboxylgruppen teilneutralisiert sind, bei geringerem Comonomerengehalt stärkere Effekte bezüglich der Schutzwirkung gegen die Bildung von water trees zeigen.

**Patentansprüche**

1. Elektrisches Kabel, enthaltend eine Kabelisolierung mit hoher Widerstandsfähigkeit gegenüber dem Entstehen oder dem Wachstum von Wasserbäumchen (water trees) und mit hoher Alterungsbeständigkeit bestehend aus einem Ethylenpolymerisat (I) und 0,5 bis 40 Gew.-%, bezogen auf das Ethylenpolymerisat (I), eines von (I) unterschiedlichen Ethylencopolymerisats (II) und üblichen Zusatzstoffen in üblichen Mengen, dadurch gekennzeichnet, daß das Ethylencopolymerisat (II) ein Ionomer ist, das neben überwiegenden Mengen Ethylen eine $C_3$- bis $C_6$-Alkencarbonsäure oder eine $C_4$- bis $C_6$-Alkendicarbonsäure bzw. ein -dicarbonsäureanhydrid einpolymerisiert enthält, wobei die im Ethylencopolymerisat-Ionomer (II) einpolymerisierte Carbonsäure bzw. das einpolymerisierte Carbonsäureanhydrid mit Metallen der 1. oder 2. Gruppe des Periodensystems zu 15 bis 30 Mol-% zum Metallsalz umgesetzt ist.

2. Elektrisches Kabel, enthaltend eine Kabelisolierung nach Anspruch 1, dadurch gekennzeichnet, daß im Ethylencopolymerisat-Ionomer (II) Acrylsäure oder Maleinsäureanhydrid einpolymerisiert ist.

3. Elektrisches Kabel, enthaltend eine Kabelisolierung nach Anspruch 1, dadurch gekennzeichnet, daß das Metallkation ein Natrium- oder Zinkkation ist.

4. Elektrisches Kabel, enthaltend eine Kabelisolierung nach Anspruch 1, dadurch gekennzeichnet, daß das Ethylencopolymerisat-Ionomer (II) einen Schmelzindex, gemessen bei 190°C und 2,16 kp Belastung nach DIN 53735, von 0,2 bis 20 g/10 min hat.

**EP 0 323 581 B1**

5. Elektrisches Kabel, enthaltend eine Kabelmischung nach Anspruch 1, dadurch gekennzeichnet, daß die ungesättigten Carbonsäuren bzw. Cabonsäureanhydride im Ethylencopolymerisatlonomer (II) pfropfcopolymerisiert sind.

**Claims**

1. An electric cable which contains a cable insulation having high resistance to the formation or growth of water trees and high aging resistance and consisting of an ethylene polymer (I) and from 0.5 to 40 % by weight, based on the ethylene polymer (I), of an ethylene copolymer (II) which differs from (I) and conventional additives in the usual amounts, wherein the ethylene copolymer (II) is an ionomer which, in addition to predominant amounts of ethylene, contains a $C_3$-$C_6$-alkenecarboxylic acid or a $C_4$-$C_6$-alkenedicarboxylic acid or a $C_4$-$C_6$-alkenedicarboxylic anhydride as copolymerized units, from 15 to 30 mol % of the carboxylic acid copolymerized in the ethylene copolymer ionomer (II) or of the copolymerized carboxylic anhydride having been reacted with metals of group 1 or 2 of the Periodic Table to give the metal salt.

2. An electric cable containing a cable insulation as claimed in claim 1, wherein acrylic acid or maleic anhydride is copolymerized in the ethylene copolymer ionomer (II).

3. An electric cable containing a cable insulation as claimed in claim 1, wherein the metal cation is a sodium or zinc cation.

4. An electric cable containing a cable insulation as claimed in claim 1, wherein the ethylene copolymer ionomer (II) has a melt flow index of from 0.2 to 20 g/10 min, measured at 190°C and under a load of 2.16 kg according to DIN 53,735.

5. An electric cable containing a cable blend as claimed in claim 1, wherein the unsaturated carboxylic acids or carboxylic anhydrides are graft-copolymerized in the ethylene copolymer ionomer (II).

**Revendications**

1. Câble électrique, comprenant un isolant pour câble ayant une résistance élevée à la formation ou au développement d'arborescences aqueuses ("water trees") et ayant une résistance au vieillissement élevée constitué d'un polymère d'éthylène (I) et de 0,5 à 40% en poids, par rapport au polymère d'éthylène (I), d'un copolymère d'éthylène différent de (I) et d'additifs usuels en quantités usuelles, caractérisé en ce que le copolymère d'éthylène (II) est un ionomère qui contient, outre des quantités prédominantes d'éthylène, un acide alcènecarboxylique en $C_3$-$C_6$. ou un acide alcènedicarboxylique en $C_4$-$C_6$ ou un anhydride dicarboxylique en liaison polymère, l'acide carboxylique en liaison polymère ou l'anhydride dicarboxylique en liaison polymère dans l'ionomère copolymère d'éthylène (II) ayant été transformé à 15-30% en moles en sel métallique avec des métaux des groupes IA et IIA de la classification périodique.

2. Câble électrique, comprenant un isolant pour câble selon la revendication 1, caractérisé en ce que de l'acide acrylique ou de l'anhydride maléique est copolymérisé dans l'ionomère copolymère d'éthylène (II).

3. Câble électrique, comprenant un isolant pour câble selon la revendication 1, caractérisé en ce que le cation métallique est un cation sodium ou zinc.

4. Câble électrique, comprenant un isolant pour câble selon la revendication 1, caractérisé en ce que l'ionomère copolymère d'éthylène (II) a un indice à l'état fondu, mesuré à 190°C et sous une charge de 2,16 kp selon la norme DIN 53735, de 0,2 à 20 g/10 min.

5. Câble électrique, comprenant un isolant pour câble selon la revendication 1, caractérisé en ce que les acides carboxyliques ou les anhydrides insaturés dans l'ionomère copolymère d'éthylène (II) sont copolymérisés par greffage.

6